Europäisches Patentamt

European Patent Office

Office européen des brevets

(11) Publication number: **0 051 680**
**B1**

# EUROPEAN PATENT SPECIFICATION

(45) Date of publication of patent specification: **21.08.85**

(21) Application number: **81901128.9**

(22) Date of filing: **24.04.81**

(86) International application number:
**PCT/JP81/00098**

(87) International publication number:
**WO 81/03190 12.11.81 Gazette 81/27**

(51) Int. Cl.⁴: **E 02 B 3/14, A 01 K 61/00**

(54) **WAVE EXTINGUISHING CAISSON.**

(30) Priority: **09.05.80 JP 6240/80**

(43) Date of publication of application:
**19.05.82 Bulletin 82/20**

(45) Publication of the grant of the patent:
**21.08.85 Bulletin 85/34**

(84) Designated Contracting States:
**FR**

(56) References cited:
**GB-A- 683 360**
**JP-A-52 162 040**
**JP-U-52 162 041**
**US-A-3 386 250**
**US-A-3 898 958**
**US-A-4 165 711**

**CEMENT, vol. 24, no. 12, December 1972 J.F. AGEMA: "Havendammen aan zee", pages 511-514**

(73) Proprietor: **IWASA, Nobuhiko**
**12-21 Motobuto 1-chome Urawa-shi**
**Saitama 336 (JP)**

(72) Inventor: **IWASA, Nobuhiko**
**12-21 Motobuto 1-chome Urawa-shi**
**Saitama 336 (JP)**

(74) Representative: **Hranitzky, Wilhelm Max et al**
**NOVAPAT - CABINET CHEREAU 5, Place du Molard**
**CH-1204 Genève (CH)**

Courier Press, Leamington Spa, England.

## Description

This invention relates to a permeable wave dissipation caisson preferably, made of concrete, and placed on a seabed to dissipate the energy of waves passing therethrough.

Wave dissipation has been achieved thus far by using tetrapods or concrete blocks. Different kinds of such tetrapods or concrete blocks are described in an article published in "CEMENT", vol. 24 No. 12, pages 511—514. (December 1972) by J. F. Agema entitled "Havendammen aan zee". Tetrapods are more particularly described in British Patent Specification No. 683 360 (Etablissements NEYRPIC). This method has the disadvantage that the tetrapods or concrete blocks used are moved by the energy of waves or that a multitude of units thereof required for preventing such movement results in the increased cost therefor.

Moreover, obstruction of the movement of waves by the blocks prevents the alternating flow of seawater through the blocks, which causes corruption of the seawater.

It is true that there have been blocks having permeable structure, but some of them are built only by beams arranged in the shape of a box with walls inside and, therefore, there is the possibility that they may be turned round by the energy of waves. Furthermore, the place wherein the blocks are set is dug deep by the waves, which makes a caisson unstable. The present invention is intended to provide a stable wave dissipation caisson which is not moved by the energy of waves.

In addition, the present invention has the purpose of providing a caisson which not only improves the alternating flow of seawater therethrough but also can be utilized as a fishing rock owing to its permeable structure.

A water current control block, which may also be utilized for absorbing wave energy along seashores, has been described in US Patent No. 3,386,250 (SUSUMU KATAYAMA). This water control block is a hollow tetrahedral body, each of the four sides thereof being in the same shape of an isosceles triangle and having an opening communicating with the interior of said body. While such hollow body has a certain ability of absorbing wave energy, there is a need for a wave dissipation device having a still greater efficiency of absorption of wave energy. Moreover, the above mentioned tetrahedral body suffers from the drawback that it cannot easily be piled up in a stable manner.

The present invention is intended to provide a caisson which has a very high efficiency of absorption of wave energy and which can be piled one atop the other due to its box-shaped structure.

According to the present invention, a wave dissipation caisson consisting of a hollow body, delimited by walls having openings which communicate with the interior of said body is provided, said caisson being characterized in that it comprises: a frame having a bottom wall adapted to rest on the floor of a body of water said bottom wall having a plurality of openings therethrough, said frame including a plurality of vertical frame members extending upwardly from said bottom wall and a plurality of horizontal frame members connected to said vertical frame members to form open sides and an open top of said frame; a first pair of trapezoidal wing pieces each having a large edge and a small edge, said first pair of trapezoidal wing pieces being connected to each other at said small edges thereof and diverging outwardly toward said large edges thereof; and a second pair of trapezoidal wing pieces each having a large edge and small edge, said second pair of trapezoidal wing pieces being connected to each other at said small edges thereof and diverging outwardly toward said large edges thereof; each of said wing pieces having a plurality of openings therein with said first and second pair of trapezoidal pieces being connected to each other at said connected small edges thereof with said first pair of trapezoidal wing pieces rotated by 90° with respect to said second pair of trapezoidal wing pieces; said connected first and second pair of trapezoidal wing pieces being connected into said frame with each large edge of said first pair of trapezoidal wing pieces connected to and extending along a respective one of said vertical frame members at one end of said bottom wall, one of said large edges of said second pair of trapezoidal wing pieces being connected to and extending along the upper horizontal frame member at the opposite end of said bottom wall, and the other of said large edges of said second pair of trapezoidal wing pieces being connected to and extending along an edge of said bottom wall at said opposite end of said bottom wall.

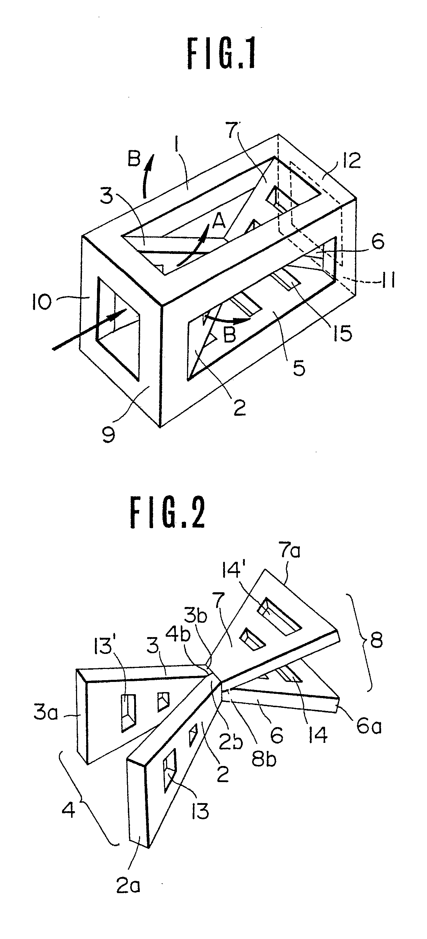

By this construction, the waves entering the caisson as shown by an arrow in Fig. 1 of the attached drawings are deflected and divided in the vertical direction A and in the horizontal direction B by openings provided in the wing body and are further broken up vertically and horizontally by the rear wing body joined to the front wing body at an angle of 90°. Thus, the waves are broken up and made turbulent in the caisson and thereby the energy of the waves is scattered and dissipated completely.

Moreover, the holes made in the bottom wall absorb the energy of waves, whereby the possibility of the caisson being upset by the waves is eliminated. In addition, the existence of the bottom wall in addition to the holes prevents the waves from penetrating into the place wherein the caisson is installed and from digging up the seabed at this place, whereby the stability of the installed caisson can be maintained. Furthermore, since the caisson has a permeable structure and, in addition, each wind piece is provided with holes, the ratio of a space inside the caisson is high and this makes the caisson inhabitable for fish and shellfish. Therefore, the caisson may also be utilized as a fishing rock.

In addition to the aforesaid effects, the permeable structure and the existence of holes in each wing piece in the caisson which has a volume of 4—500 m³ usually make it possible to reduce the quantity of concrete to be used and thus the cost therefor.

Further, the caisson in the present invention does not obstruct the alternating flow of seawater through the caisson, whereby the corruption of the seawater at the back of the caisson is prevented. Moreover, the condition of the box-type caisson makes it easy to pile it up, and thus stable piling thereof can be assured.

Figure 1 is a perspective view of the wave dissipation caisson which is an embodiment of the present invention, while Figure 2 is a perspective view of the structure of junction of two sets of wing bodies forms part of the wave dissipation caisson.

For the purpose of more detailed description of the present invention, further explanation is made hereunder in accordance with the attached drawings.

Fig. 1 shows an embodiment of the wave dissipation caisson of the present invention, which is made of concrete.

The box-type frame 1 is a frame wherein no closed side and upper walls are provided but only a bottom surface wall 5 is provided. The upper parts thereof are constituted only by angled sections of a framework. Inside the frame, a set of two trapezoidal wing pieces 2 and 3 is arranged as shown in Fig. 2. The smaller sides or edges 2b and 3b of the wing pieces are made to face each other and are joined to form a wing body 4. On the other side, the smaller sides or edges of two trapezoidal wing pieces 6 and 7 are also made to face each other in the same manner and joined to form the other wing body 8. The opposed parts 4b and 8b of the two wing bodies 4 and 8 are joined to each other in their shown positions at an angle of 90° to each other, and a structure thus constituted is housed in and fixed to the frame.

The fixation is made in such a manner that the larger sides of each wing body are fixed to the respective angled sections of the framework, that is, the larger sides 2a and 3a of the wing body 4 are fixed to the angled sections or frame members 9 and 10 of the framework and the larger sides 6a and 7a of the other wing body 8 to the horizontal angled sections or frame members 11 and 12 thereof. Frame member 11 is formed by one edge of wall 5. In each of the wing pieces 2, 3, 6 and 7 and in the bottom wall 5 an appropriate numbers of holes 13, 13', 14 14' and 15, are respectively provided.

The wave dissipation caisson of the present invention can be used as a breakwater, a revetment or a pier in a harbour, on a coast and in a river, as well as for the use as a fishing rock which is inhabitable by fish.

**Claims**

1. A wave dissipation caisson consisting of a hollow body, delimited by walls having openings which communicate with the interior of said body, characterized in that it comprises:

a frame (1) having a bottom wall (5) adapted to rest on the floor of a body of water, said bottom wall having a plurality of openings (15) therethrough, said frame (1) including a plurality of vertical frame members (9, 10) extending upwardly from said bottom wall and a plurality of horizontal frame members (11, 12) connected to said vertical frame members to form open sides and an open top of said frame;

a first pair (4) of trapezoidal wing pieces (2, 3) each having a large edge (2a, 3a) and a small edge (2b, 3b), said first pair of trapezoidal wing pieces being connected to each other at said small edges thereof and diverging outwardly toward said large edges thereof; and

a second pair (8) of trapezoidal wing pieces (6, 7) each having a large edge (6a, 7a) and small edge, said second pair of trapezoidal wing pieces, being connected to each other at said small edges thereof and diverging outwardly toward said large edges thereof;

each of said wing pieces (2, 3, 6, 7) having a plurality of openings (13, 13', 14, 14') therein with said first and second pair of trapezoidal pieces being connected to each other at said connected small edges thereof with said first pair of trapezoidal wing pieces rotated by 90° with respect to said second pair of trapezoidal wing pieces;

said connected first and second pairs (4, 8) of trapezoidal wing pieces being connected into said frame with each large edge (2a, 3a) of said first pair (4) of trapezoidal wing pieces connected to and extending along a respective one of said vertical frame members (9, 10) at one end of said bottom wall (5), one of said large edges of said second pair (8) of trapezoidal wing pieces being connected to and extending along the upper horizontal frame member (12) at the opposite end of said bottom wall (5), and the other (6a) of said large edges of said second pair (8) of trapezoidal wing pieces being connected to and extending along an edge of said bottom wall (5) at said opposite end of said bottom wall.

2. A wave dissipation caisson according to claim 1, wherein said frame includes four vertical frame members and four horizontal frame members to form a rectangular frame, an open side of said frame adjacent said one end of said bottom wall defining a front of said caisson for receiving incoming waves which are dispersed and deflected upwardly through said open top on said frame and between said first pair (4) of trapezoidal wing pieces, and sideways through two of said open sides through said openings (13, 13') of said first pair of trapezoidal wing pieces.

3. A wave dissipation caisson according to claim 1, wherein said bottom wall (5) includes three openings (15) and each of said trapezoidal wing pieces (2, 3, 6, 7) of said first (4) and second pairs (8) of trapezoidal wing pieces includes two openings (13, 13', 14, 14').

## Patentansprüche

1. Senkkasten für das Brechen von Wellen, bestehend aus einem Hohlkörper, der durch Wände begrenzt ist, in denen Öffnungen ángeordnet sind, die mit dem Inneren des Körpers in Verbindung stehen, dadurch gekennzeichnet, daß er aufweist:

einen Rahmen (1) mit einer Bodenwand (5), die geeignet ist auf dem Grund eines Gewässers zu ruhen, wobei diese Bodenwand mit einer Vielzahl von sie durchsetzenden Öffnungen (15) versehen ist und der Rahmen (1) eine Vielzahl von senkrechten Rahmenteilen (9, 10) aufweist, die sich von der Bodenwand nach oben erstrecken, sowie eine Vielzahl von waagrechten Rahmenteilen (11, 12), die mit den senkrechten Rahmenteilen verbunden sind um so offene Seiten und eine offene Oberseite zu bilden;

ein Paar (4) trapezförmige Flügelteile (2, 3), deren jedes eine große Grundlinie (2a, 3a) und eine kleine Grundlinie (2b, 3b) aufweist, wobei das erste Paar trapezförmiger Flügelteile an ihren kleinen Grundlinien miteinander verbunden ist und nach außen zu ihren großen Grundlinien hin auseinanderläuft; und

ein zweites Paar(8) trapezförmiger Flügelteile (6, 7), deren jedes eine große Grundlinie (6a, 7a) und eine kleine Grundlinie aufweist, wobei das zweite Paar trapezförmiger Flügelteile an ihren kleinen Grundlinien miteinander verbunden ist und nach außen zu ihren großen Grundlinien hin auseinanderläuft, wobei:

jedes Flügelteil (2, 3, 6, 7) mit einer Vielzahl von Öffnungen (13, 13', 14, 14') versehen ist und fas erste und zweite Paar trapezförmiger Flügelteile an ihren miteinander verbundenen kleinen Grundlinien derart miteinander verbunden sind, daß das erste Paar trapezförmigen Flügelteile um 90° versetzt ist zum zweiten Paar trapezförmiger Flügelteile;

die miteinander verbundenen ersten und zweiten Paare (4, 8) trapezförmiger Flügelteile innerhalb des Rahmens derart mit ihm verbunden sind, daß jede große Grundlinie (2a, 3a) des ersten Paars (4) trapezförmiger Flügelteile mit einem entsprechenden senkrechten Rahmenteil (9, 10) an einem Ende der Bodenwand (5) verbunden ist und sich an ihm entlang erstreckt, eine der großen Grundlinien des zweiten Paars (8) trapezförmigen Flügelteile mit dem oberen waagrechten Rahmenteil (12) an dem dem Boden (5) gegenüberliegenden Ende verbunden ist und sich an ihm entlang erstreckt und die andere (6a) der großen Grundlinien des zweiten Paars (8) trapezförmiger Flügelteile mit einem Rand der Bodenwand (5) am gegenüberliegenden Ende der Bodenwand verbunden ist und sich an ihm entlang erstreckt.

2. Senkkasten für das Brechen von Wellen nach Anspruch 1, bei dem der Rahmen vier senkrechte Rahmenteile und vier waagrechte Rahmenteile enthält, um einen rechtwinkligen Rahmen zu bilden, sowie eine offene Seite des Rahmens, die demjenigen Ende der Bodenwand benachbart ist, das das Vorderteil des Senkkastens zur Aufnahme ankommender Wellen bildet, die verteilt und nach oben abgelenkt werden durch das offene Obterteil des Rahmens und zwischen dem ersten Paar (4) trapezförmiger Flüglteile und entlang Seitenwegen durch zwei der offenen Seiten durch Öffnungen (13, 13') hindurch des ersten Paars trapezförmiger Flügelteile.

3. Senkkasten zum Brechen von Wellen nach Anspruch 1, bei dem die Bodenwand (5) drei Öffnungen (15) aufweist und jeder trapezförmige Flügelteil (2, 3, 6, 7) des ersten Paars (4) und des zweiten Paars (5) trapezförmiger Flügelteile zwei Öffnungen (13, 13', 14, 14') aufweist.

## Revendications

1. Caisson de dissipation de vagues constitué d'un corps creux, délimité par des parois présentant des ouvertures qui communiquent avec l'intérieur du corps, caractérisé en ce qu'il comprend:

— un châssis (1) comportant une paroi inférieure (5) destinée à reposer sur le fond d'une masse d'eau, la paroi inférieure comportant une pluralité d'ouvertures (15), le châssis (1) comprenant une pluralité d'éléments de châssis verticaux (9, 10) s'étendant vers le haut à partir de la paroi inférieure et une pluralité d'éléments de châssis horizontaux (11, 12) connectés aux éléments de châssis verticaux de manière à former des côtés ouverts et un sommet ouvert du châssis;
— une première paire (4) d'ailes trapézoïdales (2, 3) ayant chacune un grand côté (2a, 3a) et un petit côté (2b, 3b), les deux ailes de la première paire d'ailes trapézoïdales étant connectées l'une à l'autre à leurs petits côtés et divergeant vers l'extérieur dans la direction de leurs grands côtés; et
— une seconde paire (8) d'ailes trapézoïdales (6, 7) ayant chacune un grand côté (6a, 7a) et un petit côté, les deux ailes de la seconde paire d'ailes trapézoïdales étant connectées l'une à l'autre à leurs petits côtés et divergeant vers l'extérieur dans la direction de leurs grands côtés;
— chacune des ailes (2, 3, 6, 7) comportant une pluralité d'ouvertures (13, 13', 14, 14') avec les première et seconde paires d'ailes trapézoïdales connectées l'une à l'autre à leurs petits côtés connectés, la première pair d'ailes trapézoïdales se trouvant à 90° de la seconde pair d'ailes trapézoïdales;
— les première et seconde paires connectées (4, 8) des ailes trapézoïdales étant reliées au châssis avec chaque grand côté (2a, 3a) de la première paire (4) des ailes trapézoïdales connecté à et s'étendant le long d'un élément respectif des élements de châssis verticaux (9, 10) à une extrémité de la paroi inférieure (5), l'un des grands côtés de la seconde paire (8) d'ailes trapézoïdales étant connecté à et s'étendant le long de l'élément horizontal supérieur de châssis (12) à l'extrémité opposée de la paroi inférieure (5), et l'autre (6a) des grands côtés de la seconde paire (8) d'ailes trapézoïdales étant connecté à et s'étendant le long d'un bord de la paroi inférieure (5) à l'extrémité opposée de la paroi inférieure.

2. Caisson de dissipation de vagues selon la revendication 1, où le châssis comporte quatre éléments verticaux de châssis et quatre éléments horizontaux de châssis de manière à former un châssis rectangulaire, un côté ouvert du châssis contigu à une extrémité de la paroi inférieure définissant l'avant du caisson pour recevoir les vagues entrantes qui sont dispersées et déviées vers le haut à travers le sommet ouvert du châssis et entre la première paire (4) d'ailes trapézoïdales, et latéralement en traversant deux des côtés ouverts en passant par les ouvertures (13, 13') de la première paire d'ailes trapézoïdales.

3. Caisson de dissipation de vagues selon la revendication 1, où la paroi inférieure (5) comprend trois ouvertures (15) et chacune des ailes trapézoïdales (2, 3, 6, 7) de la première paire (4) et de la seconde paire (8) d'ailes trapézoïdales comporte deux ouvertures (13, 13', 14, 14').

# FIG.1

# FIG.2